# FASCICULE DE BREVET EUROPEEN

(11) **EP 0 675 692 B1**
(45) Date de publication et mention de la délivrance du brevet: **21.08.1996**
(21) Numéro de dépôt: 94902845.0
(22) Date de dépôt: 21.12.1993
(51) Int. Cl.: A42B 3/04, G02B 27/00

(54) **CASQUE DE PROTECTION EQUIPE DE SYSTEMES OPTRONIQUES ET PROCEDE DE REGLAGE**
SCHUTZHELM MIT OPTRONISCHER EINRICHTUNG UND VORRICHTUNG ZUM EINSTELLEN
PROTECTIVE HELMET FITTED WITH OPTRONIC SYSTEMS AND METHOD OF ADJUSTMENT

(30) Priorité: 22.12.1992 FR 9215480; 29.06.1993 FR 9307894
(43) Date de publication de la demande: 11.10.1995
(73) Titulaire: SEXTANT AVIONIQUE, F-92360 Meudon-la-Forêt (FR)
(72) Inventeur: BAUDOU, Jo[l, F-92402 Courbevoie Cédex (FR); DARBO, Benoît, F-92402 Courbevoie Cédex (FR); LACROUX, Patrick, F-92402 Courbevoie Cédex (FR); VITTE, Vincent, F-92402 Courbevoie Cédex (FR)
(74) Mandataire: Simonnet, Christine
(86) Numéro de dépôt international: FR9301280
(87) Numéro de publication internationale: WO9414349

(56) Documents cités:
- EP-A- 0 284 389
- EP-A- 0 290 293
- EP-A- 0 395 570
- EP-A- 0 475 679
- GB-A- 2 062 285

## Description

L'invention concerne un casque de protection selon le préambule de la revendication 1 et décrit dans EP-A-0 475 679.

L'invention se situe dans le domaine des ensembles optoélectroniques destinés à être montés sur un casque.

Elle concerne un casque équipé de moyens optroniques de visualisation et un procédé de réglage de la position d'une image générée par les moyens optroniques.

Les ensembles optroélectroniques comprennent :
- un moyen générateur d'une image
- des moyens de traitement et renvoi de l'image
- un moyen de renvoi de l'image vers l'oeil du porteur du casque.

Le moyen générateur d'images peut être par exemple un écran de tube cathodique, un écran à cristaux liquides, une image transportée par fibre optique, une ou plusieurs diodes électroluminescentes disposées en matrice et commandables individuellement ou collectivement pour former une image par points ou encore une mire projetée.

Les moyens de traitement et renvoi comprennent en général des éléments optiques tels que des lentilles, des miroirs, des hologrammes fonctionnels.

Le moyen de renvoi vers l'oeil de l'observateur est souvent constitué par la visière du casque.

Cette visière réalisée en matériau transparent assure ainsi à la fois un rôle de protection du visage du porteur et de renvoi optique.

Le bon fonctionnement de l'ensemble optronique requiert que ses différents composants soient et restent bien positionnés entre eux. De plus, la visière qui est l'élément final de renvoi vers l'oeil de l'observateur doit être bien positionnée par rapport à cet oeil.

Dans les dispositifs existants, les divers composants de la chaîne sont montés sur la coque du casque et chaque casque est personnalisé individuellement pour être adapté à la morphologie du porteur.

Les opérations de réglage de la phase de personnalisation sont assez longues et fastidieuses en particulier pour le porteur du casque. De plus, les coques actuelles de casque sont peu rigides et se déforment sous l'effet de variations de température ou sous l'effet des forces d'inerte dans les phases d'accélération.

Il s'ensuit que les composants de l'ensemble optoélectronique se déplacent les uns par rapport aux autres et que la qualité de l'image se dégrade.

Par rapport à cet état de la technique l'invention vise à constituer un ensemble optoélectronique pour casque dont tous les éléments, y compris la visière, soient liés entre eux par une structure mécanique rigide.

La présence d'une telle structure permet de séparer les opérations de réglage de la chaîne optronique des opérations d'adaptation à l'observateur constituant la phase de personnalisation du casque.

Cette séparation présente les avantages suivants :
- elle facilite les opérations de réglage car le réglage de la chaîne optronique peut être réalisé industriellement en usine sur un banc adapté. L'adaptation à la morphologie du porteur du casque se résume au déplacement par rapport au casque de l'ensemble de la structure, ou d'une partie seulement de cette structure. Dans ce dernier cas la structure est équipée de moyens propres à la rendre de nouveau indéformable après les réglages.

Il en résulte une diminution du coût de fabrication.
- si le mode de fixation de la structure sur le casque est réversible, la séparation facilite les opérations de maintenance puisque l'ensemble optomécanique revient seul en usine. La séparation facilite l'interchangeabilité de deux ensembles ayant la même fonction. Elle permet également avec des contraintes sur les points de fixation l'interchangeabilité pour des ensembles ayant des fonctions différentes. On pourra ainsi remplacer facilement par exemple un ensemble optronique pour vision de nuit ou de vision infrarouge par un viseur de casque.

La fixation des éléments optroniques sur une structure mécanique rigide améliore la permanence de la qualité de l'image puisque les divers composants sont fixes les uns par rapport aux autres.

A toutes ces fins, l'invention a pour objet un casque de protection selon la revendication 1.

Dans un mode de réalisation particulier, la structure est autoporteuse. On veut dire par là que des sous structures en forme de tube enfermant les éléments optroniques sont elles-mêmes rigides et que leur assemblage mécanique constitue une structure rigide. Ce mode de réalisation est particulièrement adapté aux ensembles optroniques binoculaires car il est alors possible de bâtir la structure selon deux branches droite et gauche qui s'équilibrent.

Dans un autre mode de réalisation la structure mécanique autonome est constituée par au moins deux sous structures mobiles l'une par rapport à l'autre. Dans ce cas l'une des sous structures peut être constituée par une platine en forme de coque, la platine étant sensiblement parallèle à la coque du casque. Dans ce mode de réalisation il est avantageux que la première sous-structure soit la partie mécanique fixée à la coque du casque et que la seconde sous-structure portant des moyens optroniques soit mobile par rapport à la première, de façon à créer un mouvement de rotation de l'axe optique des moyens optroniques.

Dans cette forme avantageuse de réalisation la sous-structure fixée au casque peut être un renfort de la coque du casque, par exemple une nervure.

Selon l'invention lorsqu'on parle de structure mécanique rigide portant l'optronique, il s'agit de la structure mécanique par laquelle sont reliées les éléments optroniques de génération et transport d'image et un élément de renvoi vers l'oeil du porteur, cet élément pouvant être une partie d'une visière du casque.

Lorsque l'invention est réalisée sous la forme d'une structure rigide unique, l'adaptation à la morphologie particulière d'un pilote est réalisée dans un premier mode par translation de la structure rigide par rapport à la coque du casque. Cette structure autonome qui contribue à la rigidification de la coque du casque est déplacée par rapport à la coque du casque par une combinaison de trous oblongs et de cales d'épaisseur. Les trous oblongs permettent le déplacement latéral de boulons destinés à fixer la structure rigide sur la coque.

Les cales d'épaisseur permettent un déplacement relatif vertical.

Cette solution présente l'avantage de la simplicité de réalisation, par contre la coque du casque qui doit pouvoir contenir la structure, quelle que soit son déplacement latéral est nécessairement large.

Le surdimensionnement de la coque du casque présente deux inconvénients.

D'une part il contribue à l'augmentation de masse du casque et, d'autre part il peut contribuer à faire sortir le casque d'un gabarit d'encombrement préalablement fixé. Cette dernière opportunité se présente en particulier lorsque le casque est destiné à être porté dans un habitacle de dimension réduite tel qu'un cockpit d'avion ou le poste de conduite d'une voiture de formule 1.

C'est pourquoi dans une seconde forme de réalisation l'adaptation à la morphologie particulière du porteur c'est à dire l'alignement de l'axe optique de l'image renvoyée par l'élément de renvoi ou combineur avec l'axe optique de l'oeil du porteur, est réalisée préférentiellement au moyen d'une rotation d'une partie au moins de la structure rigide créant une rotation de l'axe optique des moyens optroniques.

L'alignement réalisé selon cette seconde forme de réalisation permet une réduction du volume du casque, en particulier par réduction de sa largeur et partant une diminution de la masse globale du casque.

Dans le cas d'un monoculaire, l'utilisation de cette seconde forme de réalisation peut permettre, si l'on donne au réglage une ampleur suffisante, d'adapter la projection de l'image synthétique, à volonté sur l'oeil droit ou l'oeil gauche, et ceci sans augmenter sensiblement les dimensions et la masse de la coque du casque et de la structure porteuse rigide, du dispositif optronique. Cette forme de réalisation est adaptée à tout combineur ayant au moins un axe de révolution, particulièrement à des combineurs sphériques, puisque dans ce cas on a le choix de l'axe de révolution.

L'invention est également relative au procédé qui devient particulièrement simple de mise en position de l'image optronique dans la position réglée par rapport à l'oeil d'un porteur du casque.

Il s'agit d'un procédé de mise dans une position réglée d'une image générée par un ensemble de moyens optroniques d'une visualisation de casque, selon la revendication 20.

Dans un mode de réalisation du procédé c'est l'assemblage de la coque et de la structure rigide qui est réglable selon deux degrés de liberté. Dans un autre mode de réalisation l'assemblage est réglable pour un degré de liberté par un assemblage réglable de la structure et de la coque et pour l'autre par réglage de la structure rigide. A cette fin cette dernière pourra comporter plusieurs parties mobiles par rapport à une partie fixe, le réglage selon un degré de liberté étant obtenu par réglage de la position des parties mobiles par rapport à la partie fixe.

Des formes de réalisation de casques selon l'invention et le procédé de réglage pour individualisation du casque seront maintenant illustrées à l'aide d'exemples particuliers de réalisation qui seront décrits en référence aux dessins annexés dans lesquels :
- les figures 1 et 2 représentent une vue de côté et en perspective d'un ensemble optronique monoculaire par exemple un viseur de casque sur sa structure mécanique autonome ;
- la figure 3 est une vue en perspective d'une coque de casque destinée à recevoir la structure porteuse représentée figures 1 et 2 ;
- la figure 4 représente un détail de la fixation de la structure mécanique autonome sur la coque du casque ;
- la figure 5 représente un ensemble optronique binoculaire constituant une structure autoporteuse, monté sur une coque de casque.
- la figure 6 représente une vue d'ensemble en perspective d'un casque comportant une structure rigide selon l'invention et dans lequel les moyens optroniques sont mobiles en rotation par rapport à la structure rigide;
- les figures 7a à c représentent le détail d'un mécanisme fixé à la platine et permettant la rotation de la partie optronique ;
- les figures 8a et b représentent un détail de changement de mire mécanique lorsque la génération d'image se fait par diode et que l'on passe d'un réglage pour un oeil à un réglage à l'autre oeil ;
- les figures 9 et 10a et b représentent un autre mode de réalisation du dispositif dont la vue d'ensemble est représentée figure 6 ;
- la figure 11 est une vue de face d'un casque selon l'invention équipé d'un dispositif binoculaire à structure autoporteuse chaque monoculaire étant mobile en rotation ;
- la figure 12 représente une vue de côté du casque selon la figure 11 ;
- la figure 13 représente une coupe partielle d'éléments de la figure 11.

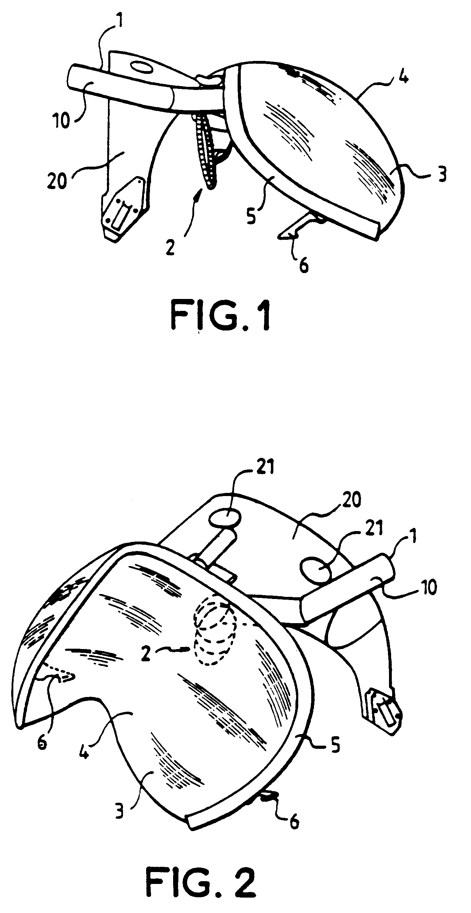

Les figures 1 et 2 représentent de profil et en perspective un ensemble optronique monoculaire 10 comportant notamment un miroir de renvoi 2 et une visière 3. La visière elle-même est composée d'une partie transparente 4 et d'un cerclage rigidifiant 5. Sur les deux figures, la visière est en position ouverte. Dans cet exemple de réalisation, la visière 3 est pivotante selon un axe horizontal. Des crochets 6 permettent de la maintenir en position fermée. La génération et le transport d'images jusqu'au miroir de renvoi 2 sont assurés par des éléments contenus dans une sous-structure porteuse en forme de tube 1. Les éléments constituant l'ensemble optronique sont fixés sur une platine 20. Cette platine est une plaque formée et usinée qui a sensiblement la forme de la partie avant de la coque d'un casque. Elle est suffisamment rigide pour ne pas se déformer sous l'action des forces d'inerte lors d'accélérations. Elle comporte des trous oblongs 21 permettant sa fixation, avec réglage, à la coque d'un casque.

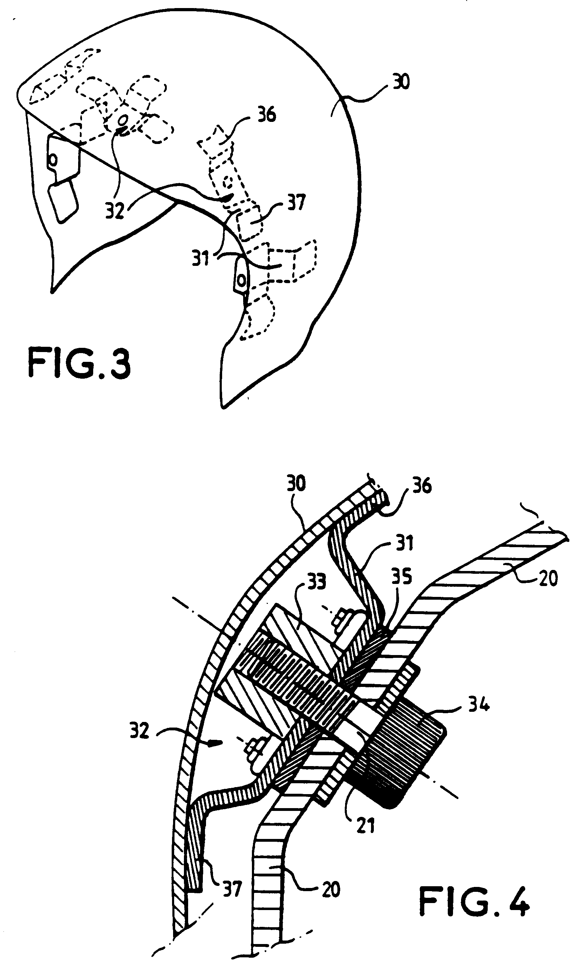

Le dessin d'une telle coque est représenté figure 3.

Cette figure représente en perspective une coque de casque 30. Cette coque est équipée de pattes de fixation 31.

La figure 4 montre le détail de fixation de la platine 20 sur la coque 30. Une patte 31 a, en coupe, sensiblement une forme de U, prolongée aux deux extrémités des branches du U par des parties perpendiculaires extérieures 36, 37. Ces parties perpendiculaires sont solidaires mécaniquement de la coque du casque. La partie creuse 32 du U loge un écrou prisonnier 33. Un boulon 34 passant dans l'un des trous oblongs 21 de la platine de fixation 20 permet la fixation de la platine sur la coque 30. La platine peut être déplacée en translation grâce aux trous oblongs et à des rondelles de calage 35. De préférence, les rondelles 35 sont élastiques de façon à amortir les vibrations entre la coque et la platine.

L'ensemble platine coque constitue une structure en caisson qui, à masse égale, présente une plus grande résistance aux déformations.

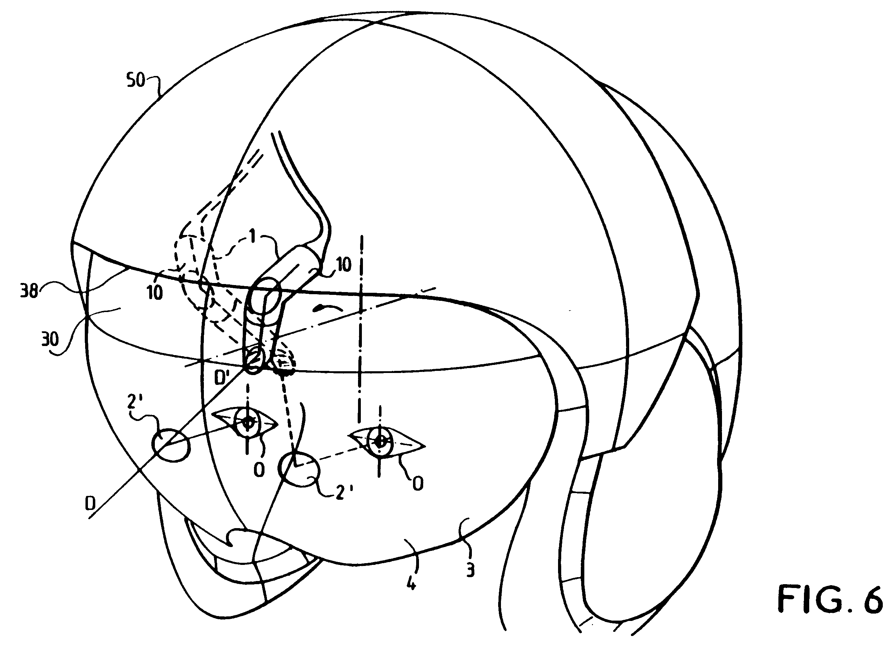

Dans l'ensemble représenté figure 4, la platine de fixation 20 de l'ensemble optronique 10 est fixée à l'intérieur de la coque 30 du casque. Elle pourrait aussi bien être fixée à l'extérieur si l'encombrement l'exigeait. Dans ce cas, le casque doit être parfois complété par une enveloppe rigide 50 (figure 6) externe venant se fixer sur la platine ou sur la coque du casque. Cette enveloppe a pour fonction de créer un profil aérodynamique. Cette fonction est nécessaire lorsque le porteur du casque est susceptible d'actionner un siège éjectable (cas de l'avion militaire). Dans les autres cas, hélicoptère, char,..., cette enveloppe supplémentaire n'est pas indispensable.

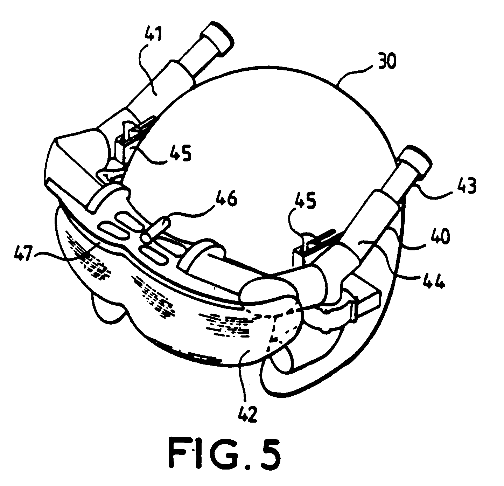

La figure 5 représente un autre exemple de réalisation. Dans cet exemple, un ensemble optronique binoculaire 40 est logé à l'intérieur d'une structure autoporteuse 41. La structure est dite autoporteuse car l'ensemble du dispositif, à l'exception d'une visière 42, est logé dans une sous structure en forme de tubes 43 rigides qui constituent un assemblage symétrique. L'assemblage est constitué de deux branches 44 symétriques l'une de l'autre par rapport à un plan vertical sagittal. Les deux branches ont sensiblement une forme de L. Deux pinces interchangeables 45 et un pion de centrage à rotule 46 permettent la fixation au casque. Les pinces 45 qui créent un centrage long, et la rotule 46 qui crée un arrêt en rotation et translation permettent l'isostatisme. La coque du casque comporte des axes non représentés sur lesquels viennent se fixer les pinces 45 et une pièce rapportée non représentée recevant la rotule du pion de centrage. Le réglage en translation est assuré par l'interchangeabilité des éléments 46 et 45 dont les longueurs et hauteurs sont à choisir parmi une gamme permettant une gamme de réglages suffisants.

Un autre mode de fixation de la structure porteuse qui rend plus difficile le démontage et l'interchangeabilité consiste à maintenir la structure en place en prenant ses constituants dans une mousse dure polymérisable. L'usage, la composition et la mise en oeuvre de telles mousses sont connus dans l'art. Selon l'utilisation envisagée ici, un outillage maintient la structure en place pendant tout le temps de polymérisation de la mousse. Les éléments de structure sont pris dans la mousse et ne bougent plus.

Cette façon de faire présente l'avantage de réaliser un moulage de la tête du porteur en sorte que le casque vient naturellement en position et reste positionné de façon fixe par rapport à la tête du porteur.

Dans les modes de réalisation décrits ci-dessus en référence aux figures 1 à 5, la platine rigide 20 ou la structure autoporteuse 40 sont positionnés en position réglée par rapport à l'élément de renvoi 2 par translation deux axes. Il sera maintenant décrit en référence aux figures 6 à 13 des modes de réalisation de l'invention dans lesquels le positionnement en position réglée est obtenu au' moins partiellement par rotation soit d'un premier élément de la structure rigide par rapport à un second soit par rotation de toute la structure rigide par rapport à la coque. Un complément de réglage peut être obtenu par une seconde rotation ou une translation.

La figure 6 représente une vue en perspective d'un casque comportant une coque 30 et une visière 3 comportant une partie transparente 4. En position relevée, la visière 3 peut se loger dans un logement 38 prévu entre la coque 30 et une autre coque 50 destinée à donner une forme aérodynamique, utile lors d'une éventuelle éjection. Une sous structure porteuse 1 contenant un ensemble optronique monoculaire 10 a été représentée selon deux positions, l'une en traits pleins l'autre en pointillés.

La sous structure 1 est mécaniquement raccordée à une platine 20 qui pour des raisons de clarté de la figure n'a pas été représentée.

Dans la position représentée en traits pleins l'axe optique DD' de l'ensemble optronique 10 est confondu avec l'axe optique d'une surface semi-réfléchissante 2'. Cette surface 2' joue le rôle du miroir 2 dans les exemples de réalisation décrits en référence aux figures 1 à 5. Cette surface 2' est incluse dans la partie transparente 4 de la visière 3. Bien que cette surface fasse partie intégrante de la visière son existence peut en général être constatée par la différence des qualités optiques de cette partie 2' et du reste de la visière et dans certaines forme de réalisation par une variation locale de la courbure de la visière se distinguant de la variation de courbure d'ensemble.

Le réglage de l'optronique consiste à adapter la position des moyens optroniques de génération d'image 10, par rapport au combineur 2' de façon à faire coïncider l'axe optique de l'oeil 0 du porteur individuel du casque et l'axe de l'image renvoyée par le combineur 2'. En général la surface du combineur 2' est assez grande pour qu'il n'y ait pas de difficultés d'adaptation entre les moyens optroniques et le combineur. Par contre pour un observateur individuel la position de l'oeil est déterminée et caractérisée par l'espace interpupillaire (IPD) qui est la distance séparant les deux yeux. La rotation de l'ensemble optronique autour de l'axe optique de révolution du combineur 2' ne change rien à la liaison optronique-combineur, par contre elle déplace latéralement la position de l'axe de l'image renvoyée de telle sorte qu'il est possible d'adapter la position de cet axe à la valeur de l'espace interpupillaire. Le réglage latéral étant acquis le réglage en hauteur sera effectué par exemple par le rembourrage de la coque du casque adapté par moulage à la tête du porteur individuel du casque.

Dans l'exemple représenté figure 6, les surfaces 2' sont sphériques et le centre des sphères est situé dans le plan sagittal, ce qui correspond pour le casque à son plan de symétrie. L'axe de rotation de l'optronique appartient au plan sagittal.

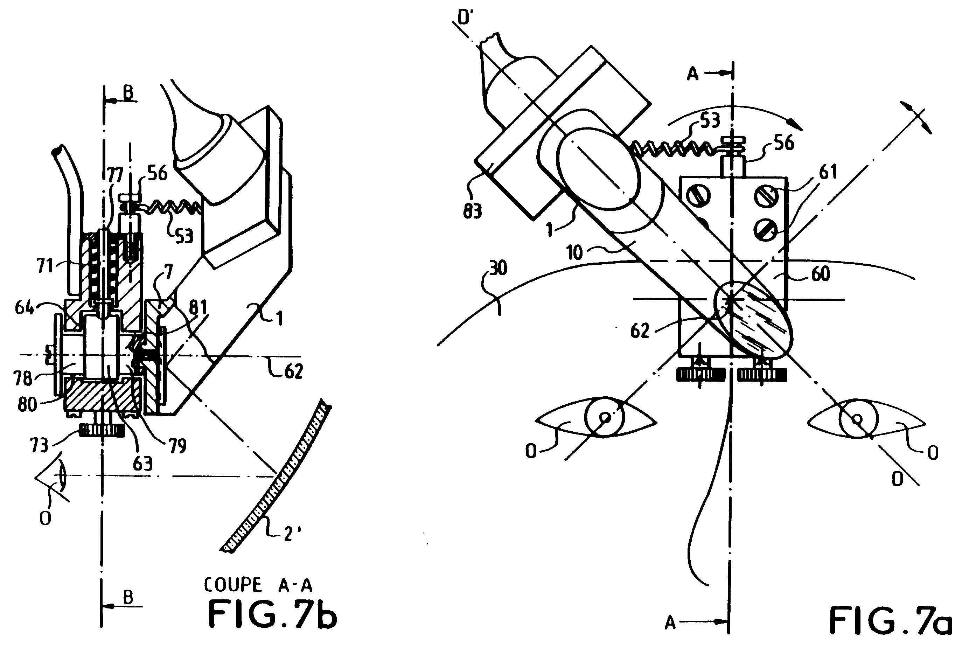

Un exemple de mécanisme permettant de faire tourner l'optronique entre deux positions l'une correspondant à l'oeil gauche, l'autre à l'oeil droit d'un observateur, et pour chacune de ces positions d'opérer un réglage fin entre des valeurs extrêmes d'espaces interpupillaires sera ci-après exposé en référence aux figures 7a à 7c.

La figure 7a est une vue de face d'un tel exemple de mécanisme.

Elle représente un corps 60, fixé par des vis 61 à une partie d'une platine (non représenté) rigidement liée à un support d'une visière 3 (non représenté). L'ensemble optronique 10 d'axe DD' est mobile en rotation autour d'un axe représenté sur la figure 7a par un point 62. Un ressort de rappel 53 est fixé à l'une de ses extrémités sur un pion 56 du corps 60 et à l'autre, à une partie axialement éloignées selon DD' de l'axe de rotation 62, du tube 1 contenant l'optronique.

Les figures 7b et 7c sont destinées à montrer le mécanisme interne du corps 60. La figure 7b est une coupe selon la ligne AA de la figure 7a et la figure 7c est une coupe selon la ligne BB de la figure 7b. La figure 7c sera tout d'abord commentée. Elle montre un arbre 63 mécaniquement lié au tube 1 contenant les moyens optroniques 10. L'arbre 63 est mobile en rotation dans un logement 64 du boîtier. L'arbre a la forme d'un cercle sur lequel est rapporté un secteur s'étendant au-delà de surface du cercle. Sur la figure 7c l'arbre 63 a été représenté dans la position qu'il occupe dans le logement 64 lorsque le tube 1 est à gauche. Le secteur 66 est terminé par deux plans inclinés 67, 68. Dans la position représentée le plan incliné 67 est maintenu en position par un poussoir 77 mobile dans un trou 69. Le trou 69 débouche d'un côté dans le logement 64 et de l'autre à l'extérieur du corps 60. Il est fermé par une plaque 70 comportant un trou dans lequel le poussoir 77 est mobile. Un ressort 71 logé dans le trou 69 autour du poussoir 77 appuie d'une part sur la plaque 70 et d'autre part sur un épaulement 72 du poussoir 77.

Des vis 73, 74 sont logées dans des trous taraudés 75, 76 du corps 60. Ces trous sont débouchants d'une part à l'extérieur du corps 60 et d'autre part dans le logement 64. Dans la position représentée figure 7c une extrémité arrondie du poussoir 77 est en appui sur le plan incliné 67 du secteur dépassant 66, tandis que la vis 73 est en appui sur l'autre plan incliné 68 du secteur dépassant 66.

Le fonctionnement est le suivant.

Par action sur la vis 73 il est possible de régler finement la position angulaire de l'arbre 63 autour de l'axe 62. La remontée hors du logement 64 du poussoir 77 permet le passage du tube 1 dans une position symétrique de la position représentée, par rapport à l'axe yy' de la figure 7c. Le ressort 71 est destiné à maintenir une pression entre l'arbre 63, et le poussoir 77 d'autre part pour minimiser la valeur des jeux et contrer les vibrations et à maintenir un contact permanent entre le plan incliné 68 et la vis 73.

La coupe AA de la figure 7b est destinée à montrer la liaison mécanique du tube 1 et de l'arbre 63. L'arbre 63 est prolongée transversalement par des axes 78, 79 tournant sur des paliers 80-81 du corps 60. L'axe 79 est emmanché et vissé dans une pièce 7 du tube 1.

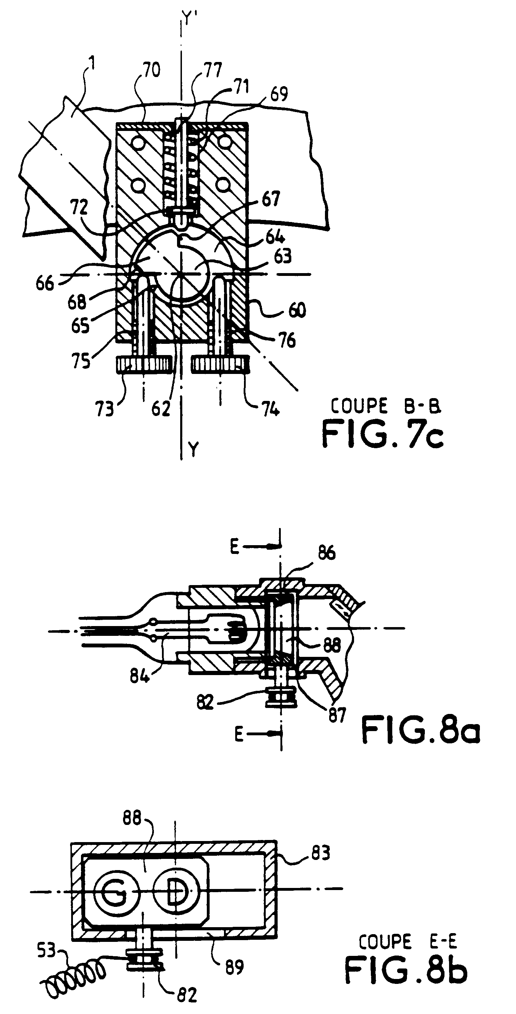

Les figures 8a et b sont destinées à montrer un mécanisme de changement de mire dans le cas d'un viseur de casque dont la mire est constituée par une figure éclairée par diodes électroluminescentes. Dans ce cas compte tenu des aberrations connues du système de transmission optronique d'image employé il peut s'avérer utile de partir d'une image légèrement différente de celle que l'on veut obtenir à l'arrivée. Dans de tels cas l'image de départ pour une présentation à l'oeil droit est en général différente de l'image de départ pour une présentation à l'oeil gauche.

Dans ce cas le ressort 53 est fixé comme représenté figure 7a d'une part à un pion 56 du corps 60 et d'autre part à un pion coulissant 82 transversalement à l'axe DD' des moyens optroniques 10. Ce pion coulisse dans un support 83 représenté schématiquement figure 7a et selon deux coupes transversales objet des figures 8a et 8b.

La coupe 8a est une coupe transversale selon l'axe DD', la coupe 8b est effectuée selon la ligne EE de la figure 8a.

On a représenté des moyens d'éclairage 84, un support 83 d'un porte-mire 88 qui comporte des rainures hautes et basses 86, 87 dans lesquelles peut coulisser le porte-mire 88 qui porte à droite l'image droite et à gauche l'image gauche. Un trou oblong traversant 89 pratiqué dans le support 83 permet l'entraînement du porte-mire 88 entre une position extrême droite et une position extrême gauche.

Le passage de la position droite à la position gauche se fait automatiquement quand le tube 1 passe de gauche à droite grâce à l'action du ressort 53 sur le pion 82.

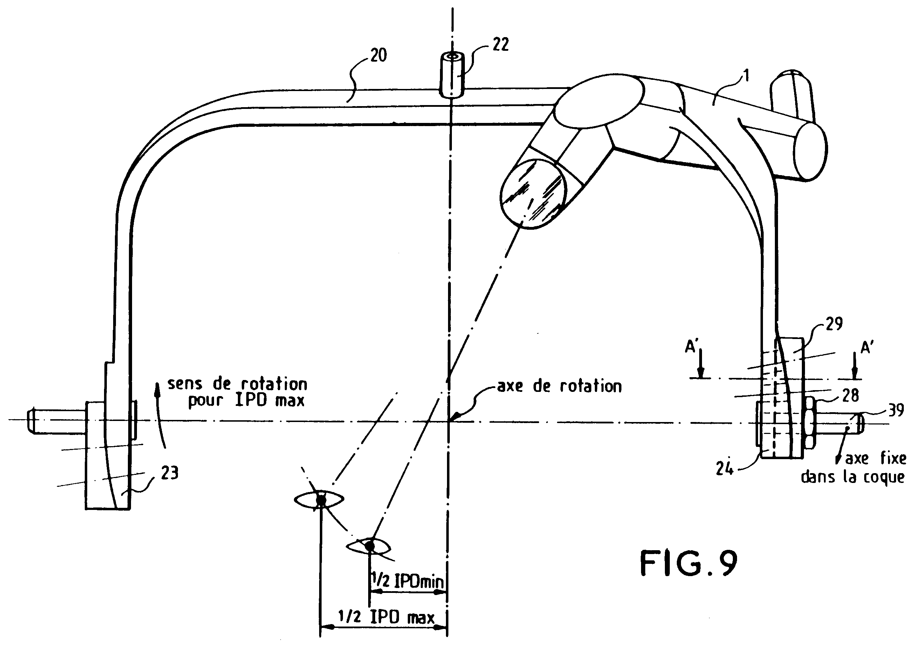

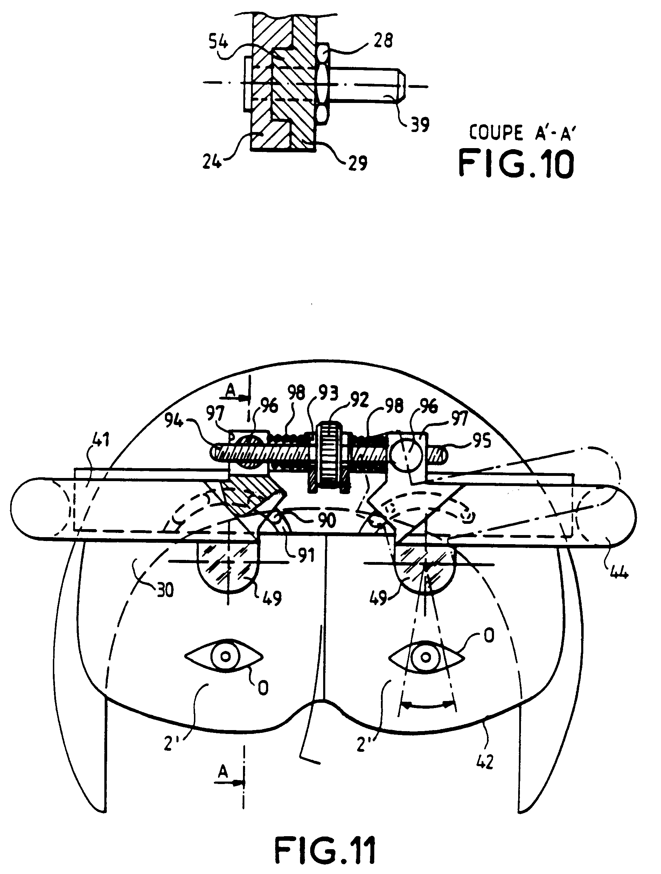

Les figures 9 et 10 illustrent un autre mode de réalisation de l'invention dans lequel le tube 1 constituant une sous-structure rigide contenant l'optronique 10 est solidaire d'une platine rigide 20. Cette platine comporte un pion 22 qui a pour axe un axe vertical contenu dans le plan sagittal. Le pion 22 est contenu en position montée dans un logement oblong de la coque 30 non représenté dans lequel il peut coulisser radialement. La platine a sensiblement une forme d'arceau ayant deux extrémités 23, 24 de forme extérieur cylindrique, l'axe de révolution de la partie de cylindre, étant l'axe de révolution des parties optiques de la visière lorsqu'elle est en position basse. Chacune des extrémités peut coulisser selon un plan perpendiculaire au plan sagital dans un rail, solidaire d'un axe 39, qui est solidaire de la coque 30 du casque. Une partie filetée de cet axe 39 permet de maintenir solidaire et immobilisée dans la position de rotation réglée une pièce 29 solidaire de l'axe 39 et l'extrémité 24 de la platine. La fixation est obtenue par serrage au moyen d'un écrou 28 de l'extrémité 24 et de la pièce 29 telle que représentée en coupe dans un plan parallèle au plan sagittal figure 10. Cette coupe montre également l'emboîtement de l'extrémité 24 et de la pièce 29 dans un plan perpendiculaire au plan sagittal.

Le rail est constitué par un bossage 54 de la pièce 29 solidaire de la coque du casque. L'extrémité 24 a une forme permettant l'encastrement à coulissement dans le bossage 54 de la pièce 29.

La rotation n'est nécessaire que sur un angle très petit puisqu'il suffit de pouvoir passer d'un IPD min à un IPD max. les dimensions d'IPD min et max sont connues de l'homme de l'art.

Les figures 11, 12, 13 représentent une variante de réalisation de la structure monobloc autoporteuse telle que décrite en référence à la figure 5.

La figure 11 est une vue de face d'ensemble de la coque 30 du casque et de la structure autoporteuse 41.

Une visière 42 comporte deux zones optiques 2' sphériques constituant des surfaces de renvoi pour chaque oeil. Dans ce mode de réalisation les deux éléments symétriques en L 44 ne sont plus reliés dans la partie frontale par une structure rigide mais par une structure mécanique permettant un pivotement mécanique de chacun des L composant la structure tubulaire. L'axe de rotation de chacune des moitiés en L 44 est un axe de révolution de chacune des surfaces de renvoi 2'.

L'optronique contenue dans les pièces en L 44 est optiquement terminée par des miroirs 49 qui constituent la liaison optique entre l'optronique et la visière.

Un exemple de mécanisme destiné à assurer de façon symétrique par rapport au plan sagittal une telle rotation sera maintenant décrit.

Le mécanisme comprend un pion de guidage 90. Ce pion 90 est monté coulissant dans une rainure 91 dont la ligne axiale est un parallèle d'une surface cylindrique liée mécaniquement à la coque 30 du casque. Il est avantageux pour des raisons de précision de positionnement que le pion 90 ait une forme s'étendant longitudinalement dans le sens de la ligne axiale de la surface cylindrique. L'axe de révolution de la surface cylindrique dans lequel est découpé la rainure 91 est un axe de révolution de la surface de renvoi 2'. Une vis moletée 92 est emprisonnée dans une chape 93 liée mécaniquement à la coque 30 du casque. La vis moletée 92 a son plan transversal sensiblement dans le plan sagittal.

Elle est prolongée de façon symétrique par rapport à ce plan de deux tiges filetées 94, 95 l'une ayant un pas de filetage à droite et l'autre à gauche. Chacune des tiges 94, 95 est engagée dans un écrou prisonnier pivotant 96. L'écrou 96 est prisonnier dans une chape 97 mécaniquement liée à un élément structurel du dispositif optronique en L 44. Deux ressorts longitudinaux 98 ayant pour axe, l'axe de chacune des tiges filetées 94, 95 sont en appui à une extrémité sur la chape 93 de maintien de la vis moletée 92 et à l'autre extrémité sur la chape d'emprisonnement 97 de l'écrou 96.

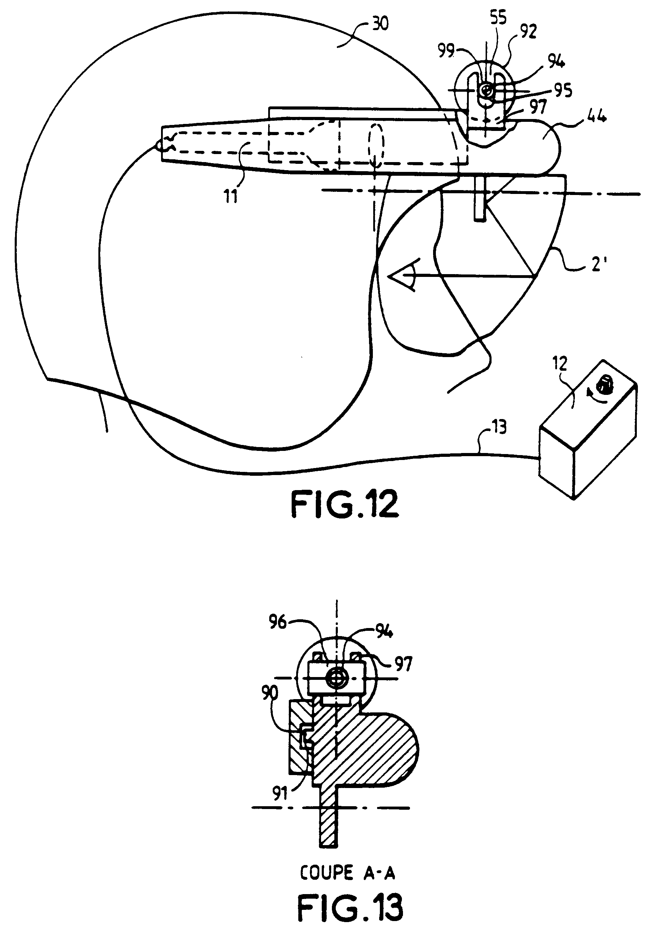

Afin de mieux faire comprendre l'arrangement mécanique des divers composants concourant à la rotation symétrique des sous structuresen L 44, la partie liant la sous structure 44 à la chape 97 et à l'écrou 96 a été représenté en coupe selon la ligne AA de la figure 11 sur la figure 13. Cette coupe fait également apparaître les formes du pion 90 et de la rainure 91.

Le fonctionnement est le suivant.

L'action sur la vis moleté 92 provoque le rapprochement ou l'éloignement des écrous 96. La partie droite de la figure 11 montre en pointillé un rapprochement de la partie 44 provoquant un agrandissement du réglage de l'espace interpupillaire des moyens optroniques.

Le pivotement de l'écrou autour d'un axe parallèle au plan sagittal permet de conserver les tiges 94, 95 horizontales. Chaque chape 97 est pourvue d'une fente oblongue 55 (figure 12) permettant le mouvement des tiges 94, 95 dans un plan vertical. Le rapprochement de l'écrou 96 entraîne le rapprochement de la partie supérieure de la structure 44 ce qui provoque une rotation de cette structure guidée par le pion 90 dans la rainure 91.

Le ressort 98 a pour fonction de rattraper les jeux nécessaires au mouvement en exerçant une force d'appui. Sur la figure 12 il a été représenté en outre un tube cathodique 11 de génération de la symbologie. La position de l'image symbolique générée peut être commandée par un moyen de commande 12 lié au tube par une liaison 13.

Le dispositif de rotation décrit ci-dessus a été utilisé, car en raison du faible volume disponible entre les yeux du pilote et la visière il n'a pas été possible de faire un guidage en rotation directement par l'ajustement d'un arbre dans un alésage.

Avec les dispositifs décrits ci-dessus en référence aux figures 6 à 9, pour opérer le réglage de l'optronique, on règle tout d'abord la valeur de l'IPD par la position en rotation de parties rigides portant l'optronique puis on ajuste la hauteur ainsi réglée par rapport à l'oeil du porteur. Dans le cas des structures décrites en relation aux figures 11 à 13, le réglage interpupillaire s'effectue casque monté.

## Revendications

1. Casque de protection comportant une coque (30), des moyens optroniques (10, 40) générant une image collimatée, un combineur (2, 2') comportant une surface réfléchissante, laquelle a au moins un axe optique de révolution, le combineur renvoyant l'image collimatée vers la position d'un oeil (0) d'un porteur du casque, le casque étant muni de moyens pour régler et bloquer dans une position réglée la position des moyens optroniques par rapport au combineur, casque caractérisé en ce que les moyens (60-77, 22-24, 28-29, 39, 90-98) de réglage de la position des moyens optroniques (10, 40) permettent une rotation de ces moyens autour de l'axe - ou de l'un des axes de révolution du combineur.

2. Casque de protection selon la revendication 1, caractérisé en ce que les moyens (10, 40) constituant l'ensemble optronique sont assemblés sur une structure mécanique autonome rigide (20, 41) elle-même fixée à la coque (30) du casque.

3. Casque selon la revendication 2, caractérisé en ce que la structure mécanique (41) est autoporteuse.

4. Casque selon la revendication 2, caractérisé en ce que la structure mécanique comporte une platine (20) ayant sensiblement la forme d'au moins une partie de la coque (30) du casque.

5. Casque selon la revendication 2, caractérisé en ce que la structure autonome rigide (20) est constituée par un renfort de la coque du casque.

6. Casque selon la revendication 2, caractérisé en ce que la structure autonome rigide (20) porte une sous-structure rigide (1) logeant les moyens optroniques.

7. Casque selon la revendication 6, caractérisé en ce que la rotation des moyens optroniques (10, 40) résulte de ce que la sous-structure rigide (1) et la structure rigide (20) sont mobiles en rotation l'une par rapport à l'autre, les moyens de blocage étant des moyens de blocage de la sous-structure rigide (1).

8. Casque selon la revendication 7, caractérisé en ce que la sous-structure rigide comporte un arbre (63) dont une section droite a la forme d'un cercle sur lequel est rapporté un secteur (66) terminé par deux plans inclinés (67, 68) l'arbre étant mobile en rotation dans un logement (64) d'un corps (60) fixe par rapport à la structure rigide (20), le blocage de l'arbre étant assuré par un poussoir (77) et une vis (73, 74) appuyant sur chacun des plans inclinés (67,68).

9. Casque selon la revendication 6, caractérisé en ce que la structure autonome rigide (20) est montée sur la coque (30) du casque au moyen de pièces (22, 23, 24, 29) permettant sa rotation par rapport à la coque (30) du casque et de pièces (39, 28) permettant sa fixation (20) dans une position réglée, la sous-structure (1) étant solidaire de la structure autonome rigide (20).

10. Casque selon la revendication 7, caractérisé en ce qu'il comporte un porte mire (88) mobile dans un support (83), le porte mire portant une image droite et une image gauche, et des moyens (53, 82, 86, 87, 89) permettant le positionnement de l'image droite ou gauche adaptée à la position réglée.

11. Casque selon la revendication 3, caractérisé en ce que la structure mécanique autoporteuse (41) est constituée de sous-structures en formes de tubes (43) rigides comprenant deux branches (44) en L symétriques l'une de l'autre par rapport à un plan vertical.

12. Casque selon la revendication 11, caractérisé en ce que les sous-structures en forme de tube (43) logent des éléments optroniques (40).

13. Casque selon la revendication 12, caractérisé en ce que les deux branches (44) sont équipés de moyens (90-98) permettant leurs rotations autour d'axes horizontaux parallèles au plan sagittal du casque.

14. Casque selon la revendication 13, caractérisé en ce que les moyens de rotation des branches comportent une vis moletée (92) emprisonnée dans une chape (93) liée mécaniquement à la coque (30) du casque, la vis moletée étant prolongée de façon symétrique par des tiges filetées (94, 95) engagées dans des écrous prisonniers pivotants (96) de chapes (97) mécaniquement liées à un élément structure de chaque branche (44).

15. Casque selon l'une des revendications 2, 4 ou 6, caractérisé en ce que la fixation de la structure mécanique (20) est assurée par la prise dans une mousse dure.

16. Casque selon l'une des revendications 4 ou 6, caractérisé en ce que la structure mécanique (20) est montée sur la coque (30) du casque par l'intermédiaire de pattes de fixation (31) mécaniquement liées à la platine (20) ou à la coque (30).

17. Casque selon la revendication 1, caractérisé en ce que le combineur (2, 2') fait partie intégrante d'une visière (3) de protection équipant le casque.

18. Casque selon la revendication 17, caractérisé en ce que les moyens de rotation des moyens optroniques (10) sont constitués par un arbre (63) et un palier (80, 81) pivotant l'un dans l'autre, l'un étant fixe par rapport à la coque du casque (30) et l'autre fixe par rapport aux moyens optroniques (10).

19. Casque selon la revendication 17, caractérisé en ce que les moyens de rotation des moyens optroniques (40) comportent une fente (91) et un pion (90) coulissant dans cette fente (91), l'un de ces éléments étant fixe par rapport à la coque (30), et l'autre étant fixe par rapport aux moyens optroniques (40).

20. Procédé de mise en position réglée d'une image générée par un ensemble de moyens optroniques (10, 40) d'une visualisaton de casque, le casque comportant une coque (30) et une structure rigide (20, 41) montée sur cette coque, la structure comportant au moins deux parties, une première et une seconde, mobile l'une par rapport à l'autre, l'image étant projetée sur une surface (2, 2') d'un élément réfléchissant au moins une partie de la lumière reçue, cet élément ayant au moins un axe de révolution et ayant pour fonction dans la position réglée de renvoyer l'image vers la pupille d'un oeil (0) d'un observateur porteur du casque, procédé caractérisé en ce que la mise dans la position réglée est obtenue par rotation d'une partie de la structure rigide (20, 41) par rapport à l'autre partie autour d'un axe de révolution de l'élément réfléchissant (2, 21) et blocage dans la position réglée.

## Claims

1. Protective helmet comprising a shell (30), optronic means (10, 40) generating a collimated image, a combiner (2, 2') including a reflecting surface which has at least one optical axis of revolution, the combiner returning the collimated image to the position of an eye (O) of a wearer of the helmet, the helmet being provided with means for adjusting and locking in an adjusted position the position of the optronic means with respect to the combiner, which helmet is characterized in that the means (60-77, 22-24, 28-29, 39, 90-98) for adjusting the position of the optronic means (10, 40) allow rotation of these means about the axis - or one of the axes of revolution of the combiner.

2. Protective helmet according to Claim 1, characterized in that the means (10, 40) constituting the optronic assembly are assembled on an autonomous rigid mechanical structure (20, 41) itself fixed to the shell (30) of the helmet.

3. Helmet according to Claim 2, characterized in that the mechanical structure (41) is self-supporting.

4. Helmet according to Claim 2, characterized in that the mechanical structure includes a plate (20) having substantially the shape of at least a part of the shell (30) of the helmet.

5. Helmet according to Claim 2, characterized in that the autonomous rigid structure (20) is constituted by a reinforcement of the shell of the helmet.

6. Helmet according to Claim 2, characterized in that the autonomous rigid structure (20) carries a rigid substructure (1) housing the optronic means.

7. Helmet according to Claim 6, characterized in that the rotation of the optronic means (10, 40) results from the rigid substructure (1) and the rigid structure (20) being movable in rotation with respect to one another, the locking means being means for locking the rigid substructure (1).

8. Helmet according to Claim 7, characterized in that the rigid substructure includes a shaft (63), a cross-section of which has the shape of a circle on which a sector (66) terminated by two inclined planes (67, 68) is attached, the shaft being movable in rotation in a housing (64) of a body (60) which is fixed with respect to the rigid structure (20), the shaft being locked by a push member (77) and a screw (73, 74) bearing on each of the inclined planes (67, 68).

9. Helmet according to Claim 6, characterized in that the autonomous rigid structure (20) is mounted on the shell (30) of the helmet by means of parts (22, 23, 24, 29) allowing it to rotate with respect to the shell (30) of the helmet and parts (39, 28) allowing it to be fixed (20) in an adjusted position, the substructure (1) being solidly attached to the autonomous rigid structure (20).

10. Helmet according to Claim 7, characterized in that it includes a sighting-device holder (88) which can move in a support (83), the sighting-device holder carrying a right image and a left image, and means (53, 82, 86, 87, 89) allowing positioning of the right or left image suited to the adjusted position.

11. Helmet according to Claim 3, characterized in that the self-supporting mechanical structure (41) consists of substructures in the form of rigid tubes (43), comprising two L-shaped branches (44) which are mutually symmetrical with respect to a vertical plane.

12. Helmet according to Claim 11, characterized in that the substructures in the form of a tube (43) house optronic elements (40).

13. Helmet according to Claim 12, characterized in that the two branches (44) are equipped with means (90-98) allowing their rotations about horizontal axes parallel to the sagittal plane of the helmet.

14. Helmet according to Claim 13, characterized in that the means for rotating the branches include a knurled screw (92) captive in a fork (93) mechanically connected to the shell (30) of the helmet, the knurled screw being extended symmetrically by threaded rods (94, 95) engaged in pivoting nuts (96) captive in forks (97) mechanically connected to a structural element of each branch (44).

15. Helmet according to one of Claims 2, 4 or 6, characterized in that the mechanical structure (20) is fixed by setting in a hard foam.

16. Helmet according to one of Claims 4 or 6, characterized in that the mechanical structure (20) is mounted on the shell (30) of the helmet by means of fastening lugs (31) mechanically connected to the plate (20) or to the shell (30).

17. Helmet according to Claim 1, characterized in that the combiner (2, 2') forms an integral part of a protective visor (3) with which the helmet is equipped.

18. Helmet according to Claim 17, characterized in that the means for rotating the optronic means (10) consist of a shaft (63) and a bearing (80, 81) which can pivot in each other, one being fixed with respect to the shell (30) of the helmet and the other fixed with respect to the optronic means (10).

19. Helmet according to Claim 17, characterized in that the means for rotating the optronic means (40) include a slot (91) and a stud (90) sliding in this slot (91), one of these elements being fixed with respect to the shell (30) and the other being fixed with respect to the optronic means (40).

20. Method for setting an image generated by a set of optronic means (10, 40) of a helmet display in an adjusted position, the helmet comprising a shell (30) and a rigid structure (20, 41) mounted on this shell, the structure including at least two parts, one first and one second, which can be moved with respect to one another, the image being projected onto a surface (2, 2') of an element reflecting at least a part of the light received, this element having at least one axis of revolution, and having the function, in the adjusted position, of returning the image to the pupil of an eye (O) of an observer wearing the helmet, which method is characterized in that the adjusted position is set by rotating one part of the rigid structure (20, 41) with respect to the other part about an axis of revolution of the reflecting element (2, 2') and locking it in the adjusted position.

## Patentansprüche

1. Schutzhelm mit einer Schale (30), mit optoelektronischen Mitteln (10, 40), die ein kollimatiertes Bild erzeugen, mit einem Kombinierorgan (2, 2'), das eine reflektierende Fläche besitzt, die mindestens eine optische Drehsymmetrieachse besitzt, wobei das Kombinierorgan das kollimatierte Bild zur Position eines Auges (O) eines Helmträgers reflektiert und der Helm Mittel zur Regelung und Blockierung der Position der optoelektronischen Mittel bezüglich des Kombinierorgans in einer gewünschten Stellung besitzt, dadurch gekennzeichnet, daß die Mittel (60 bis 77, 22 bis 24, 28 bis 29, 39, 90 bis 98) zur Regelung der Position der optoelektronischen Mittel (10, 40) eine Drehung dieser Mittel um die Symmetrieachse oder eine der Symmetrieachsen des Kombinierorgans erlauben.

2. Schutzhelm nach Anspruch 1, dadurch gekennzeichnet, daß die Mittel (10, 40), die die optoelektronischen Mittel bilden, auf einer autonomen, starren, mechanischen Struktur (20, 41) zusammengefaßt sind, die ihrerseits an der Schale (30) des Helms befestigt ist.

3. Helm nach Anspruch 2, dadurch gekennzeichnet, daß die mechanische Struktur (41) selbsttragend ist.

4. Helm nach Anspruch 2, dadurch gekennzeichnet, daß die mechanische Struktur eine Platine (20) aufweist, deren Form mindestens einem Teil der Schale (30) des Helms im wesentlichen gleicht.

5. Helm nach Anspruch 2, dadurch gekennzeichnet, daß die autonome starre Struktur (20) von einer Verstärkung der Schale des Helms gebildet wird.

6. Helm nach Anspruch 2, dadurch gekennzeichnet, daß die autonome starre Struktur (20) eine starre Unterstruktur (1) trägt, die die optoelektronischen Mittel aufnimmt.

7. Helm nach Anspruch 6, dadurch gekennzeichnet, daß die Drehung der optoelektronischen Mittel (10, 40) darauf beruht, daß die starre Unterstruktur (1) und die starre Struktur (20) gegeneinander in Drehrichtung beweglich sind, wobei die Blockiermittel die starre Unterstruktur (1) blockieren.

8. Helm nach Anspruch 7, dadurch gekennzeichnet, daß die starre Unterstruktur eine Welle (63) aufweist, die im Querschnitt eine Kreisform besitzt, an die ein in zwei geneigten Ebenen (67, 68) endender Sektor (66) anschließt, wobei die Quelle in Drehrichtung in einem Sitz (64) eines bezüglich der starren Struktur (20) festen Körpers (60) beweglich ist und die Blockierung der Welle durch einen Stift (77) und eine Schraube (73, 74) bewirkt wird, die je auf eine der geneigten Ebenen (67, 68) drücken.

9. Helm nach Anspruch 6, dadurch gekennzeichnet, daß die starre autonome Struktur (20) auf der Schale (30) des Helms mit Hilfe von Bauteilen (22, 23, 24, 29), die eine Drehung dieser Struktur bezüglich der Schale (30) des Helms erlauben, und mit Hilfe von Bauteilen (39, 28) montiert ist, die die Befestigung der autonomen Struktur (20) in einer geregelten Position erlauben, wobei die Unterstruktur (1) mit der starren autonomen Struktur (20) fest verbunden ist.

10. Helm nach Anspruch 7, dadurch gekennzeichnet, daß er einen in einem Halter (83) beweglichen Visierbildträger (88) aufweist, der ein linkes und ein rechtes Bild enthält, wobei Mittel (53, 82, 86, 87, 89) die Positionierung des linken oder rechten Bilds in Anpassung an die geregelte Stellung erlauben.

11. Helm nach Anspruch 3, dadurch gekennzeichnet, daß die selbsttragende mechanische Struktur (41) aus rohrförmigen starren Unterstrukturen (43) mit zwei L-förmigen, bezüglich einer senkrechten Ebene symmetrischen Zweigen (44) besteht.

12. Helm nach Anspruch 11, dadurch gekennzeichnet, daß die rohrförmigen Unterstrukturen (43) die optoelektronischen Elemente (40) enthalten.

13. Helm nach Anspruch 12, dadurch gekennzeichnet, daß die beiden Zweige (44) mit Mitteln (90 bis 98) versehen sind, die ihre Drehung um parallel zur Augensymmetrieebene des Helms liegende waagrechte Achsen erlauben.

14. Helm nach Anspruch 13, dadurch gekennzeichnet, daß die Mittel zur Drehung der Zweige eine Schraube (92) mit Riffeln enthalten, die in einem Bügel (93) gefangen ist, welcher mechanisch mit der Schale (30) des Helms verbunden ist, wobei die geriffelte Schraube symmetrisch in Gewindestangen (94, 95) übergeht, die in drehfesten Muttern (96) stecken, welche ihrerseits in mit einem Strukturelement jedes Zweigs (44) mechanisch verbundenen Bügeln (97) schwenken können.

15. Helm nach einem der Ansprüche 2, 4 oder 6, dadurch gekennzeichnet, daß die Befestigung der mechanischen Struktur (20) durch Einbetten in einen Hartschaum erfolgt.

16. Helm nach einem der Ansprüche 4 oder 6, dadurch gekennzeichnet, daß die mechanische Struktur (20) auf der Schale (30) des Helms über Befestigungslaschen (31) montiert ist, die mechanisch mit der Platine (20) oder der Schale (30) verbunden sind.

17. Helm nach Anspruch 1, dadurch gekennzeichnet, daß das Kombinierorgan (2, 2') in eine Schutzvisierscheibe (3) des Helms integriert ist.

18. Helm nach Anspruch 17, dadurch gekennzeichnet, daß die Mittel zum Drehen der optoelektronischen Mittel (10) von einer Welle (63) und einer Lagerschale (80, 81) gebildet werden, die ineinander schwenken können, wobei ein Teil bezüglich der Schale (30) des Helms fest und der andere bezüglich der optoelektronischen Mittel (10) fest ist.

19. Helm nach Anspruch 17, dadurch gekennzeichnet, daß die Mittel zum Drehen der optoelektronischen Mittel (40) einen Schlitz (91) und eine Stift (90) enthalten, der in diesem Schlitz (91) gleitet, wobei eines dieser Elemente bezüglich der Schale (30) und das andere bezüglich der optoelektronischen Mittel (40) fest ist.

20. Verfahren, um ein von einer Einheit von optoelektronischen Helmanzeigemitteln (10, 40) erzeugtes Bild in eine geregelte Position zu bringen, wobei der Helm eine Schale (30) und eine starre Struktur (20, 41) aufweist, die auf dieser Schale montiert ist, und wobei die Struktur mindestens zwei Bereiche enthält, nämlich einen ersten und einen zweiten Bereich, die gegeneinander beweglich sind, wobei das Bild auf eine Fläche (2, 2') eines Elements projiziert wird, das mindestens einen Teil des empfangenen Lichts reflektiert und das mindestens eine Drehsymmetrieachse hat sowie in der geregelten Position das Bild zur Pupille eines Auges (O) eines den Helm tragenden Beobachters lenken soll, dadurch gekennzeichnet, daß die geregelte Position eingestellt wird durch Drehung eines Teils der starren Struktur (20, 41) bezüglich des anderen Teils um eine Drehsymmetrieachse des reflektierenden Elements (2, 2') und durch Blockierung in der geregelten Position.
